(19) Europäisches Patentamt / European Patent Office / Office européen des brevets

(11) **EP 2 130 599 A2**

(12) **EUROPEAN PATENT APPLICATION**

(43) Date of publication:
**09.12.2009 Bulletin 2009/50**

(51) Int Cl.:
*B01J 35/04* (2006.01)   *B01J 29/00* (2006.01)
*B01D 53/92* (2006.01)   *F01N 3/00* (2006.01)

(21) Application number: **09000503.4**

(22) Date of filing: **15.01.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS** | (72) Inventors:<br>• **Ohno, Kazushige**<br>  **Ibi-gun, Gifu 501-0695 (JP)**<br>• **Kunieda, Masafumi**<br>  **Ibi-gun, Gifu 501-0695 (JP)**<br>• **Ido, Takahiko**<br>  **Ibi-gun, Gifu 501-0695 (JP)** |
| (30) Priority: **20.05.2008 PCT/JP2008/059280** | (74) Representative: **HOFFMANN EITLE**<br>**Patent- und Rechtsanwälte** |
| (71) Applicant: **IBIDEN CO., LTD.**<br>**Ogaki-shi**<br>**Gifu 503-8604 (JP)** | **Arabellastrasse 4**<br>**81925 München (DE)** |

(54) **Honeycomb structure**

(57)    A honeycomb structure (100) is disclosed that includes a honeycomb unit (130) including zeolite and inorganic binder, wherein, in the honeycomb unit, plural cells extend from a first end face (110) to a second end face (115) along a longitudinal direction of the honeycomb unit (130), and the plural cells (121) are separated from each other by interposing cell walls (123), the honeycomb structure (100) **characterized in that:** a shape of a cross-sectional surface orthogonal to the longitudinal direction of the cells (121) is substantially a square; an aperture ratio of the honeycomb unit (130) is in a range from 50% to 65%; and a following formula is satisfied: 12.5V+50<Lc/wc<12.5V+200, where, the symbol V (liter) denotes the volume of the honeycomb structure (100) and the symbols wc (cm) and Lc (cm) denote the cell width and the total length, respectively, of the cells (121).

FIG.1

EP 2 130 599 A2

**Description**

BACKGROUND OF THE INVENTION

1. Field of the Invention

The present invention relates to a honeycomb structure.

2. Description of the Related Art

Conventionally, there have been developed many techniques to convert exhaust gas from vehicles. For practical use, unfortunately, it may be difficult to argue that sufficient measures have been taken against exhaust gas from vehicles. There is a trend not only in Japan but also in the entire world that regulation of exhaust gas from vehicles is becoming more and more strict. In particular, regulation for NOx emission as exhaust gas from diesel engines has been extremely aggressive. Conventionally, NOx emission has been reduced by using a method of controlling the combustion system of engines, but such a method alone cannot satisfy the current NOx regulations. To overcome the problem, an NOx conversion system (called an SCR system) using ammonia as a reducing agent has been proposed as a diesel NOx conversion system. As a catalyst carrier being used in such systems, a honeycomb structure has been widely known.
In those honeycomb structures, plural cells (through holes) extend along the longitudinal direction of the honeycomb structure from one end face to the another end face, and these cells are separated from each other by interposing cell walls carrying catalyst. Therefore, when exhaust gas passes through such a honeycomb unit, NOx in exhaust gas is converted by the catalyst supported on the cell walls, which, as a result, the exhaust gas is treated.
Generally, the cell walls of such a honeycomb structure include cordierite and support zeolite (ion-exchanged with Fe, Cu, or the like) and the like as a catalyst. Further, zeolite is used in the cell walls, and then a honeycomb structure is formed. This configuration is proposed in, for example, Japanese Patent Application Publication NO.: S61-171539.
There are various applications where a honeycomb structure has been used as a catalyst carrier. The target applications of the honeycomb structure vary from large vehicles such as trucks to general automobiles. In response to those various applications, there are many cases where, for example, shapes (especially in total length and diameter) of honeycomb structures vary.
On the other hand, size specifications of the cells (especially, cell width and cell total length) may become major factors that exert considerable influence on NOx conversion performance. Therefore, if it is possible, it may be necessary to determine each optimal value of the size specifications of the cells (especially, cell width and cell total length) to the corresponding honeycomb structures having various shapes. However, actually, it would often be ineffective and increase the cost if, for example, optimal values are obtained each time for a honeycomb structure having a special shape for very limited demand and the honeycomb structure is formed based on the obtained optimal values. Therefore, there may be many cases where the size specifications of the cells of the honeycomb structures are determined based on experience. As a result, in some honeycomb structures, the size specifications of the cells may not be well optimized. Disadvantageously, when such a honeycomb structure is used that the size specifications of the cells are not well optimized, sufficient NOx conversion performance may not be obtained.

SUMMARY OF THE INVENTION

According to an aspect of the present invention, it may become possible to provide honeycomb structures having an appropriate NOx conversion performance when changing the total length and diameters of the honeycomb units.
According to an aspect of the present invention, a honeycomb structure (100) includes a honeycomb unit (130) that includes zeolite and inorganic binder. In the honeycomb unit, plural cells extend from a first end face (110) to a second end face (115) along a longitudinal direction of the honeycomb unit (130), and the plural cells (121) are separated from each other by interposing cell walls (123). The honeycomb structure (100) is **characterized in that:** a shape of a cross-sectional surface orthogonal to the longitudinal direction of the cells (121) is substantially a square; an aperture ratio of the honeycomb unit (130) is in a range from 50% to 65%; and the formula $12.5V+50<Lc/wc<12.5V+200$ is satisfied in which, the symbol V (liter) denotes the volume of the honeycomb structure (100) and the symbols wc (cm) and Lc (cm) denote the cell width and the total length, respectively, of the cells (121).
Further, the zeolite may be β-type zeolite, Y-type zeolite, ferrierite, ZSM-5type zeolite, mordenite, faujasite, zeolite A, or zeolite L.
Further, a weight ratio of alumina to silica in the zeolite may be in a range from 30 to 50 wt%.
Further, the zeolite may be ion-exchanged with Fe, Cu, Ni, Co, Zn, Mn, Ti, Ag, or V.

Further, the honeycomb unit (130) may further include inorganic particles other than zeolite.

Further, the inorganic particles other than zeolite may include at least one selected from the group consisting of alumina, titania, silica, and zirconia.

Further, the inorganic binder may include at least one selected from the group consisting of alumina sol, silica sol, titania sol, water glass, sepiolite, and attapulgite.

Further, the honeycomb unit (130) may further include inorganic fibers.

Further, the inorganic fibers may include at least one selected from the group consisting of alumina, silica, silicon carbide, silica-alumina, glass, potassium titanate, and aluminum borate.

Further, the honeycomb structure (100) may include plural honeycomb units (130) bonded with each other by interposing an adhesive layer (150).

According to an embodiment of the present invention, it becomes possible to provide a honeycomb structure having an appropriate NOx conversion performance in changing the total length and the diameter of the honeycomb structure.

BRIEF DESCRIPTION OF THE DRAWINGS

Other objects, features, and advantages of the present invention will become more apparent from the following description when read in conjunction with the accompanying drawings, in which:

FIG. 1 is a perspective view schematically showing an example of a honeycomb structure according to an embodiment of the present invention;
FIG. 2 is a perspective view schematically showing an example of a honeycomb unit constituting the honeycomb structure in FIG. 1;
FIG. 3 is a perspective view schematically showing another configurational example of the honeycomb structure according to an embodiment of the present invention;
FIG. 4 is a block diagram schematically showing an apparatus configuration for evaluating NOx conversion performance of the honeycomb structures; and
FIG. 5 is a graph showing a range in which an excellent NOx conversion performance may be obtained, the range being indicated based on the relationship between a volume V of the honeycomb structure and a ratio of the total length Lc of the cells to the cell width wc.

BEST MODE FOR CARRYING OUT THE INVENTION

In the following, embodiments of the present invention are described with reference to the accompanying drawings.

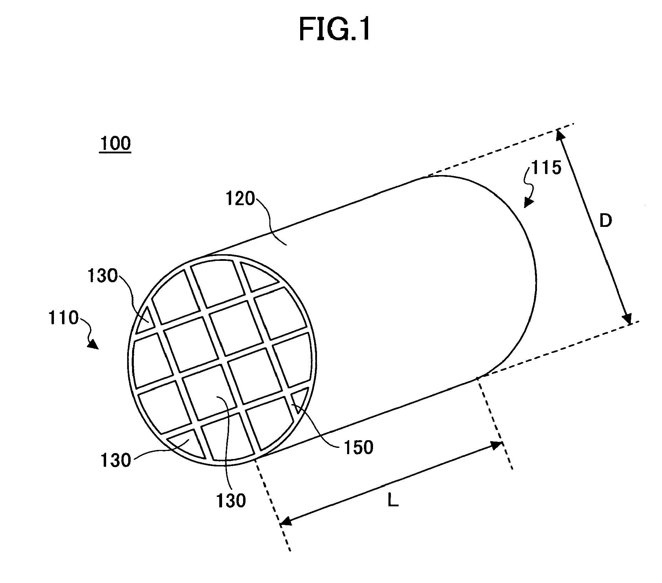

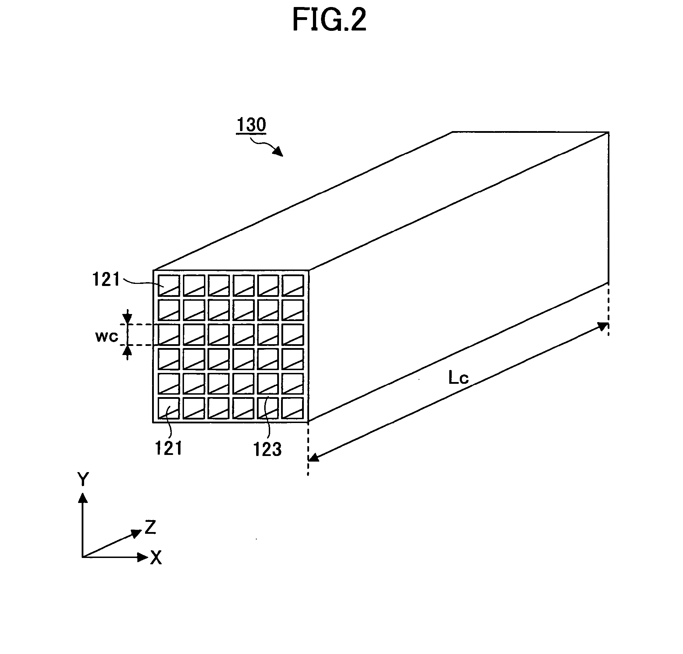

FIG. 1 schematically shows an example of a honeycomb structure according to an embodiment of the present invention. Further, FIG. 2 schematically shows an example of a honeycomb unit which is a basic unit of the honeycomb structure.

As shown in FIG. 1, the honeycomb structure 100 according to the embodiment of the present invention includes two end faces 110 and 115 and an outer peripheral coating layer 120 formed on the outer peripheral surface excluding both of the end faces 110 and 115.

The honeycomb structure 100 is formed by bonding plural honeycomb units 130 (in the example of FIG. 1, 16 units (four units in both wide and deep directions)) to each other by interposing an adhesive layer 150 and the outer peripheral surface is cut so that the honeycomb structure 100 has a desired shape (in the example of FIG. 1, a cylindrical shape).

As shown in FIG. 2, in a honeycomb unit 130, there are formed plural cells (through holes) 121 and cell walls 123, the plural cells 121 extending along the longitudinal direction of the honeycomb unit from one end face to the another end face and being separated from each other by interposing the cell walls 123, openings of the plural cells 121 being formed on both end faces. A shape of a cross-sectional surface orthogonal to the longitudinal direction (Z direction) of the cells 121 is substantially a square having a side (hereinafter referred to as a cell width) of wc. On the other hand, the total length of the cells 121 (same as the total length of the honeycomb unit 130) is given as Lc. The honeycomb unit 130 includes zeolite for converting NOx. Therefore, when the honeycomb structure according to the embodiment of the present invention is used as a catalyst carrier for converting NOx, it is not always necessary to support a noble metal catalyst on the cell walls 123. However, a noble metal catalyst may be supported by the cell walls 123.

For example, the honeycomb structure 100 may be used as a catalyst carrier of an urea SCR system having an urea tank. When exhaust gas is introduced into the urea SCR system, urea contained in the urea tank is reacted with water in the exhaust gas to produce ammonia according to the following formula (1):

$$CO(NH_2)_2 + H_2O \rightarrow 2NH_3 + CO_2 \qquad \text{formula (1)}$$

When ammonia as well as exhaust gas including NOx is introduced into the cells 121 from one end face of the honeycomb structure 100 (for example, the end face 110), within this mixed gas (including the ammonia and the exhaust gas), the following reactions (as shown in formulas (2-1) through (2-3)) occur with catalyst of the zeolite in the cell walls 123.

$$4NH_3 + 4NO + O_2 \rightarrow 4N_2 + 6H_2O \qquad \text{formula (2-1)}$$

$$8NH_3 + 6NO_2 \rightarrow 7N_2 + 12H_2O \qquad \text{formula (2-2)}$$

$$2NH_3 + NO + NO_2 \rightarrow 2N_2 + 3H_2O \qquad \text{formula (2-3)}$$

Then, the converted (NOx reduced) exhaust gas is exhausted from the other face (for example, the other end face 115) of the honeycomb structure 100. As described above, NOx in exhaust gas may be treated by introducing exhaust gas into the honeycomb structure 100. Further, a method is described above that $NH_3$ is supplied by hydrolyzing urea in aqueous solution. However, another method may be employed to supply $NH_3$.

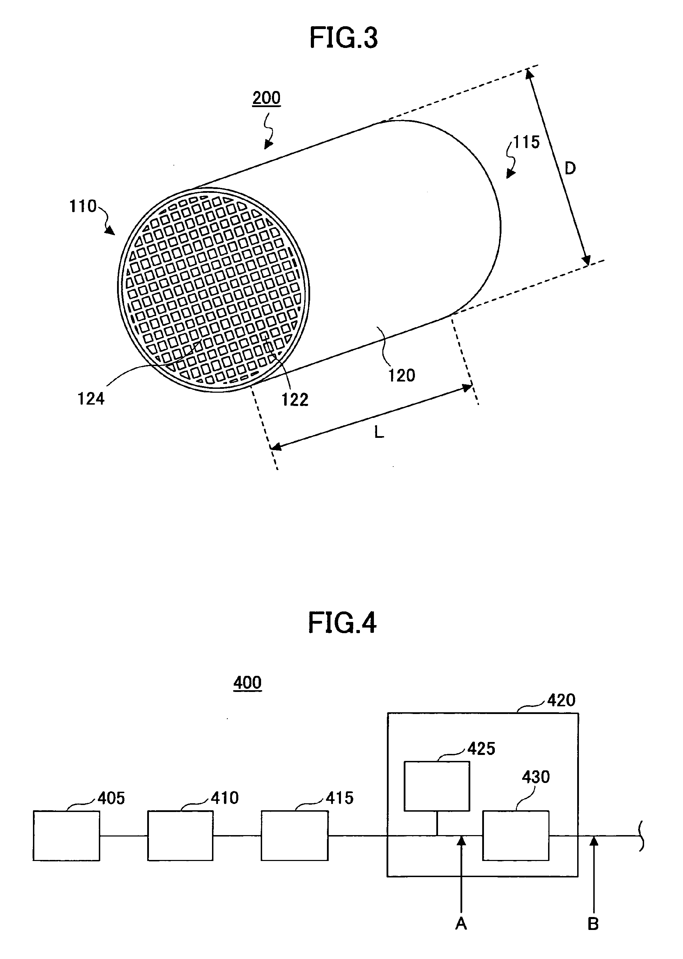

When a honeycomb structure is used as a catalyst carrier, the target applications of the honeycomb structures may widely vary, ranging from large vehicles such as trucks to general automobiles. Therefore, there are various shapes (especially in total length L and diameter D as shown in FIGS. 1 and 3) of honeycomb structures required to be provided.

On the other hand, size specifications of the cells (especially, cell width wc and cell total length Lc as shown in FIG. 2) may exert considerable influence on NOx conversion performance. Therefore, under normal circumstance, it may be necessary to determine each optimal value of the size specifications of the cells (especially, cell width and cell total length) to the corresponding honeycomb structures having various shapes. However, it may be ineffective and increase the cost if, for example, optimal values are obtained for each honeycomb structure having a special shape for very limited demand and the honeycomb structure is formed based on the obtained optimal values. Therefore, actually, there may be many cases where the size specifications of the cells of the honeycomb structures are determined based on experience. As a result, in some honeycomb structures, the size specifications of the cells may not be well optimized. Disadvantageously, when such a honeycomb structure is used that the size specifications of the cells are not well optimized, sufficient NOx conversion performance may not be obtained.

To overcome the above circumstance, the present inventors have been conducting intensive research to find out the following and completed the present invention.

(1) In normal cases, a shape of the honeycomb structure, especially its outer diameter D and its total length L, may be defined as a single parameter by using the volume V of the honeycomb structure;
(2) The size specifications of the cells having substantially a square shaped cross-sectional surface may be defined as a ratio of the total length Lc of the cell to the cell width wc, i.e., a value Lc/wc as a parameter; and
(3) It is possible to obtain the honeycomb structure having an excellent NOx conversion performance when the value Lc/wc is set in a certain range with repect to the volume V of the honeycomb structure.

Namely, according to an embodiment of the present invention, the size specifications may be obtained so that the following formula (3) is satisfied.

$$12.5V+50 < Lc/wc < 12.5V+200 \qquad \text{formula (3)}$$

Where, the symbol V (liter) denotes the volume of honeycomb structure 100, and the symbols wc (cm) and Lc (cm) denote the cell width and the total length, respectively, of the cells.

Based on the formula (3), it may become possible to obtain a honeycomb structure having an optimal NOx conversion performance even when the volume of the honeycomb structure changes. Namely, among various honeycomb structures having various total lengths and diameters, it may become possible for the honeycomb structures to always have an optimal NOx conversion performance.

Herein, the volume V of the honeycomb structure is not limited to a value in a specific range, but is preferably in a range given by the formula: 1L (liter)$\leq$V$\leq$15L (liter). The cell width wc is preferably in a range given by the formula: 0.5 (cm)$\leq$wc$\leq$2.0 (cm). If the cell width wc is less than 0.5 cm, a pressure loss of the honeycomb structure may be increased. On the other hand, if the cell width wc is greater than 2.0 cm, the geometrical surface area of the cell walls becomes small and as a result, NOx may not sufficiently come into contact with ammonia in zeolite, thereby reducing NOx conversion performance. An aperture ratio of the honeycomb unit 130 is preferably in a range from 50% to 65%.

Next, a configuration of the honeycomb structure 100 is described in more detail.

The honeycomb unit 130 constituting the honeycomb structure 100 includes inorganic binder in addition to zeolite. The honeycomb unit 130 may further include inorganic particles other than the zeolite or inorganic fibers, or both.

Preferably, the zeolite may be β-type zeolite, Y-type zeolite, ferrierite, ZSM-5type zeolite, mordenite, faujasite, zeolite A, and zeolite L. Otherwise, zeolite may be ion-exchanged with Cu, Fe, Ni, Zn, Mn, Co, Ag, or V. Further, a weight ratio of alumina to silica in the zeolite is preferably in a range from 30 to 50.

As the inorganic binder, inorganic sol and a clay binder and the like may be used. The specific examples of the inorganic sol is alumina sol, silica sol, titania sol, water glass and the like. The specific examples of the clay binders is double chain structural type clay such as white clay, kaolin, montmorillonite, sepiolite, attapulgite and the like. Any of inorganic sol and a clay binder alone or in combination thereof may be used.

Among them, preferably, at least one selected from a group consisting of alumina sol, silica sol, titania sol, water glass, sepiolite, and attapulgite may be used.

As the inorganic particles other than zeolite, particles of alumina, silica, zirconia, titania, ceria, mullite, zeolite, and the like may be used. Any of the particles alone or in combination thereof may be used. Among them, more preferably, alumina or zirconia may be used.

When inorganic fibers are added to the honeycomb unit, as a material of inorganic fibers, alumina, silica, silicon carbide, silica-alumina, glass, potassium titanate, aluminum borate, and the like may be used. Any material alone or in combination thereof may be used. Among them, more preferably, alumna may be used. Herein, whiskers are included as the inorganic fibers.

A lower limit of the amount of inorganic particles (zeolite and inorganic particles other than zeolite) in the honeycomb unit is preferably 30 wt%, more preferably 40 wt%, and further more preferably 50 wt%. On the other hand, an upper limit of the amount of inorganic particles in the honeycomb unit is preferably 90 wt%, more preferably 80 wt%, and further more preferably 75 wt%. If the amount of inorganic particles (zeolite and inorganic particles other than zeolite) in the honeycomb unit is less than 30 wt%, the amount of zeolite contributing to the conversion of the exhaust gas is relatively reduced. On the other hand, if the amount of inorganic particles (zeolite and inorganic particles other than zeolite) in the honeycomb unit is greater than 90 wt%, the strength of the honeycomb unit may be reduced.

Further, preferably, a weight ratio of alumina to silica in the zeolite is in a range from 30 wt% to 50 wt%.

A lower limit of the amount of inorganic binder as a solid content in the honeycomb unit is preferably 5 wt%, more preferably 10 wt%, and further more preferably 15 wt%. On the other hand, an upper limit of the amount of inorganic binder as a solid content in the honeycomb unit is preferably 50 wt%, more preferably 40 wt%, and further more preferably 35%. If the amount of inorganic binder is less than 5 wt% as a solid content, the strength of the formed honeycomb unit may be reduced. On the other hand, if the amount of inorganic binder is greater than 50 wt% as a solid content, the molding capability of the raw material composition may be degraded. In other words, it may become difficult to form the honeycomb unit having a desired shape.

When inorganic fibers are included in the honeycomb unit, a lower limit of the total amount of inorganic fibers is preferably 3 wt%, more preferably 5 wt%, and further more preferably 8 wt%. On the other hand, an upper limit of the total amount of inorganic fibers is preferably 50 wt%, more preferably 40 wt%, and further more preferably 30 wt%. If the amount of inorganic fibers is less than 3 wt%, the contribution of inorganic fibers to the improvement of the strength of the honeycomb unit may become smaller. On the other hand, if the amount of inorganic fibers is greater than 50 wt%, an amount of zeolite contributing the conversion of the exhaust gas is relatively reduced.

The cell density of the honeycomb unit 130 is preferably in the range of 15.5 units/cm$^2$ to 186 units/cm$^2$ (100 cpsi to 1200 cpsi), more preferably in the range of 46.5 units/cm$^2$ to 170 units/cm$^2$ (300 cpsi to 1100 cpsi), and further more preferably in the range of 62.0 units/cm$^2$ to 155 units/cm$^2$ (400 cpsi to 1000 cpsi).

The thickness of the cell wall 123 of the honeycomb unit 130 is not specifically limited, but, from a viewpoint of the strength of the honeycomb unit 130, the preferable lower limit is 0.1 mm, and from a viewpoint of conversion performance, the preferable upper limit is 0.4 mm.

The adhesive layer 150 of the honeycomb structure 100 is formed of an adhesive layer paste as the material. The material of the adhesive layer paste is not limited to, but may be a mixture of inorganic particles and inorganic binder, a mixture of inorganic binder and inorganic fibers, a mixture of inorganic particles, inorganic binder, and inorganic fibers, and the like. Further, organic binder may be added to those mixtures.

As the inorganic particles, the inorganic binder, and the inorganic fibers, the same material as used in the above honeycomb unit may be used. The organic binder may be, but not limited to, one or more organic binders selected from a group including polyvinyl alcohol, methylcellulose, ethylcellulose, carboxymethylcellulose, and the like. Among those organic binders, preferably, carboxymethylcellulose is used.

The thickness of the adhesive layer 150 is preferably in a range from 0.3 mm to 2.0 mm. If the thickness of the adhesive layer 150 is less than 0.3 mm, sufficient bonding strength may not be obtained. On the other hand, if the thickness of the adhesive layer 150 is greater than 2.0 mm, the pressure loss may be increased. The number of honeycomb units may be adaptively determined in accordance with the size of the honeycomb structure 100.

The outer peripheral coating layer 120 of the honeycomb structure 100 is formed of a paste including inorganic particles, inorganic binder, and inorganic fibers, which are the same as the materials used for forming the above-mentioned adhesive layer 150, and organic binder as raw material. The material of the outer peripheral coating layer 120 may be the same as or different from the material of the adhesive layer 150. However, preferably, the material of the outer peripheral coating layer 120 is the same as that of the adhesive layer 150. This is because, by doing this, it makes it better prevents peeling and cracking of the coating layer 120. When necessary, a pore-forming agent such as balloons (bubbles) which are a micro sized hollow spheres having oxide-based ceramic as a component, spherical acrylic particles, graphite or the like may be added to the paste as the raw material. A final thickness of the outer peripheral coating layer 120 is preferably in the range of 0.1 mm to 2.0 mm.

In the above description, an exemplary honeycomb structure 100 formed by bonding plural honeycomb units by interposing the adhesive layer 150 as shown in FIG. 1 is described.

FIG. 3 shows another configurational example of the honeycomb structure 200 according to an embodiment of the present invention. The configuration of the honeycomb structure 200 is the same as that of the honeycomb structure 100 except that the honeycomb structure 200 includes a single honeycomb unit, in which the plural cells 122 are formed in parallel with each other, extending along the longitudinal direction of the honeycomb unit 200, and separated from each other by interposing the cell walls 124. According to the example of FIG. 3, an outer peripheral coating layer 120 is formed on an outer surface of the honeycomb structure 200. However, the outer peripheral coating layer 120 may be or may not be formed.

(Method of manufacturing honeycomb structure)

Next, a method of manufacturing a honeycomb structure according to an embodiment of the present invention is described. In this description, an exemplary method of manufacturing the honeycomb structure 100 having plural honeycomb units as shown in FIG. 1 is described.

First, a raw-material paste is prepared that includes inorganic particles including zeolite, and inorganic binder as major components and, when necessary, inorganic fibers. Then a honeycomb unit molded body is formed from the raw-material paste by, for example, extrusion molding.

In addition, an organic binder, a dispersion medium, and a molding aid may be adaptively added to the raw-material paste to adjust molding capability. The organic binder may be, but not limited to, one or more organic binder selected from a group including methylcellulose, carboxymethylcellulose, hydroxyethylcellulose, polyethyleneglycol, phenol resin, epoxy resin, and the like. A blending amount of the inorganic binder is preferably in a range from 1 to 10 parts by weight with respect to 100 parts by weight in total of the solid content of the entire inorganic particles, inorganic binder, and inorganic fibers.

The dispersion medium may be, but not limited to, water, organic solvent such as benzene, alcohol such as methanol, and the like. The molding aid may be, but not limited to, ethylene glycol, dextrin, fatty acid, fatty acid soap, polyalcohol, and the like.

Preferably, the raw-material paste may be, but not limited to, mixed and kneaded. For example, the raw-material paste may be mixed by using an apparatus such as a mixer and an attritor. Further, the raw-material paste may be well kneaded by using an apparatus such as a kneader. Preferably, a method of molding the raw-material paste may be, but not limited to, a method of molding a shape having cells by, for example, extrusion molding.

Next, preferably, the obtained honeycomb unit molded body is dried. The drying apparatus for drying may be, but not limited to, a microwave drying apparatus, a hot air drying apparatus, a dielectric drying apparatus, a reduced pressure drying apparatus, a vacuum drying apparatus, a freeze drying apparatus, and the like. Preferably, the obtained molded body is degreased. The degrease conditions are not limited to, but are to be adaptively selected depending on a kind and an amount of an organic substance included in the molded body. Preferably, the molded body is degreased at a temperature of 400 ˚C for about two hours. Further, the dried and degreased honeycomb unit molded body is fired. The firing conditions is not limited to, but preferably at about 2 hours in a range from 600 ˚C to 1200 ˚C, and more preferably at about 2 hours in a range from 600 ˚C to 1000 ˚C. If the firing temperature is less than 600 ˚C, firing may not be sufficiently proceeded and the strength of the honeycomb unit may be reduced. On the other hand, if the firing temperature is greater than 1200 ˚C, the firing may proceed too much and the reaction sites of zeolite may be reduced.

Next, an adhesive layer paste that is to become the adhesive layer 150 later is applied to the side surfaces of the honeycomb units formed according to the above steps so that the thickness of the adhesive layer paste becomes substantially constant. Then other honeycomb units are boned to each other one by one by interposing the adhesive layer paste until the bonded plural honeycomb units constitute a honeycomb structure having a desired size (for example, four bonded units wide and four bonded units deep).

Next, the honeycomb structure is heated so that the adhesive layer paste is dried and solidified and the adhesive layer 150 is formed to firmly bond the honeycomb units to each other.

Next, the outer surface of the honeycomb structure is cylindrically cut using a diamond cutter or the like so that the honeycomb structure has a necessary outer shape such as a cylindrical shape.

Next, an outer peripheral coating layer paste is applied to an outer peripheral surface (side surface) of the honeycomb structure. Then, the applied outer peripheral coating layer paste is dried and solidified to form the outer peripheral coating layer 120.

After the plural honeycomb units are bonded to each other by interposing the adhesive layer (or after the outer peripheral coating layer is formed in a case where the outer peripheral coating layer is provided), preferably, the honeycomb structure is degreased. By doing this, when organic binder is included in the adhesive layer paste and the outer peripheral coating layer paste, the organic binder in those pastes may be degreased and eliminated. The degreasing conditions may be adaptively determined depending on a kind and an amount of included organic substance. However, typically, the degreasing conditions are at a temperature of 700 ˚C for about two hours.

By the above steps, the honeycomb structure shown in FIG. 1 may be manufactured.

(Example)

The present invention is described in more detail by examples and comparative examples below.

(Example 1)

First, 2250 parts by weight of Fe zeolite particles (average particle diameter: 2 $\mu$m; 550 parts by weight of alumina particles (average particle diameter: 2 $\mu$m); 2600 parts by weight of alumina sol (solid content is 30 wt%), 780 parts by weight of alumina fibers (average fiber length: 100 $\mu$m, average fiber diameter: 6 $\mu$m); 410 parts by weight of methylcellulose; a small amount of a plasticizing agent and a lubricant agent are mixed together and kneaded to obtain a mixed composition. In the Fe zeolite particles, 3 wt% of the zeolite particles with respect to the zeolite weight are ion-exchanged with Fe. Then, the mixed composition is extrusion molded by using an extrusion molding apparatus to obtain a molded body of the honeycomb structure.

Next, the molded body is fully dried by using a microwave drying apparatus and a hot air drying apparatus, then degreased at a temperature of 400 ˚C for two hours. Then, the molded body is fired at a temperature of 700 ˚C for two hours to obtain a honeycomb structure (outer diameter 102 mm X total length 120 mm, volume 1 L(liter)) (as the honeycomb structure shown in FIG. 3). The aperture ratio of the honeycomb structure is 60%. Further, the cell width wc is 0.69 mm; the thickness of the cell walls is 0.2 mm; and a cell density is 124 units/cm$^2$.

(Examples 2 through 13)

The honeycomb structures according to Examples 2 through 13 are formed in the same manner described in Example 1 except that any of the total length L, the outer diameter D, volume V or cell width wc of the honeycomb structure in Example 2 through 13 is different from that (those) of the honeycomb structure in Example 1 as shown in Table 1. Other parameter values in Examples 2 through 13 are the same as those in Example 1.

Table 1 collectively shows the data of total length L, the outer diameter D, the volume V, the ratio Lc/wc of the total length Lc of the cell to the cell width wc in the Examples 1 through 13. In Table 1, the total length Lc of cells is the same as the total length L of the honeycomb structure. Therefore, the data of the total length Lc is not shown.

Further, Table 1 includes columns of A1 and A2 in which values are obtained by the formulas A1=12.5V+50 and A2=12.5V+200, respectively, using the values V (which are volumes of the corresponding honeycomb structures). The values in the A1 column correspond to the value of the left-hand side of the inequality in formula (3). Similarly, the values in the A2 column correspond to the value of the right-hand side of the inequality in formula (3).

Table 1

| | TOTAL LENGTH :L mm | OUTER DIAMETER :D mm | VOLUME :V L | CELL WIDTH :wc mm | VALUE :Lc/wc - | A1 - | A2 - | NOx CONVERSION RATE % |
|---|---|---|---|---|---|---|---|---|
| EXAMPLE 1 | 120 | 102 | 1.0 | 0.69 | 174 | 62 | 212 | 90 |
| EXAMPLE 2 | 120 | 102 | 1.0 | 1.05 | 114 | 62 | 212 | 96 |
| EXAMPLE 3 | 75 | 203 | 2.4 | 0.69 | 109 | 80 | 230 | 98 |
| EXAMPLE 4 | 75 | 203 | 2.4 | 0.88 | 85 | 80 | 230 | 85 |
| EXAMPLE 5 | 150 | 144 | 2.4 | 0.69 | 217 | 80 | 230 | 88 |
| EXAMPLE 6 | 150 | 144 | 2.4 | 0.88 | 170 | 80 | 230 | 98 |
| EXAMPLE 7 | 150 | 144 | 2.4 | 1.05 | 143 | 80 | 230 | 99 |
| EXAMPLE 8 | 170 | 133 | 2.4 | 0.88 | 193 | 80 | 230 | 93 |
| EXAMPLE 9 | 170 | 133 | 2.4 | 1.05 | 162 | 80 | 230 | 98 |
| EXAMPLE 10 | 220 | 241 | 10.0 | 0.69 | 319 | 175 | 325 | 90 |
| EXAMPLE 11 | 220 | 241 | 10.0 | 1.05 | 210 | 175 | 325 | 96 |
| EXAMPLE 12 | 250 | 275 | 15.0 | 0.69 | 362 | 238 | 388 | 92 |
| EXAMPLE 13 | 265 | 270 | 15.0 | 1.05 | 252 | 238 | 388 | 94 |
| COMPARATIVE EXAMPLE 1 | 50 | 157 | 1.0 | 1.05 | 48 | 62 | 212 | 78 |
| COMPARATIVE EXAMPLE 2 | 150 | 90 | 1.0 | 0.69 | 217 | 62 | 212 | 79 |
| COMPARATIVE EXAMPLE 3 | 120 | 102 | 1.0 | 0.53 | 226 | 62 | 212 | 74 |
| COMPARATIVE EXAMPLE 4 | 75 | 203 | 2.4 | 1.05 | 71 | 80 | 230 | 78 |
| COMPARATIVE EXAMPLE 5 | 150 | 144 | 2.4 | 0.53 | 283 | 80 | 230 | 68 |
| COMPARATIVE EXAMPLE 6 | 170 | 133 | 2.4 | 0.69 | 246 | 80 | 230 | 75 |

| | TOTAL LENGTH :L mm | OUTER DIAMETER :D mm | VOLUME :V L | CELL WIDTH :wc mm | VALUE :Lc/wc - | A1 - | A2 - | NOx CONVERSION RATE % |
|---|---|---|---|---|---|---|---|---|
| COMPARATIVE EXAMPLE 7 | 160 | 280 | 10.0 | 1.05 | 152 | 175 | 325 | 78 |
| COMPARATIVE EXAMPLE 8 | 220 | 241 | 10.0 | 0.53 | 415 | 175 | 325 | 70 |
| COMPARATIVE EXAMPLE 9 | 235 | 235 | 10.0 | 0.69 | 341 | 175 | 325 | 77 |
| COMPARATIVE EXAMPLE 10 | 230 | 287 | 15.0 | 1.05 | 219 | 238 | 388 | 76 |
| COMPARATIVE EXAMPLE 11 | 280 | 259 | 15.0 | 0.69 | 406 | 238 | 388 | 76 |

EP 2 130 599 A2

(Comparative examples 1 through 11)

The honeycomb structures according to Comparative examples 1 through 11 were manufactured in the same manner described in Example 1 except that any of the total length L, the outer diameter D, volume V or cell width wc is different from that (those) of the honeycomb structure in Example 1 as shown in Table 1. Other parameter values in Comparative examples 1 through 11 are the same as those in Example 1.

Table 1 collectively shows data of each parameter of shape of the honeycomb structures according to Comparative examples 1 through 11 and the values of A1 and A2. As Table 1 shows, the values of Lc/wc of Examples 1 through 13 are included in a range between the values of A1 and A2. On the other hand, the values of Lc/wc of Comparative examples 1 through 11 are excluded from the range between the values of A1 and A2.

(NOx conversion performance evaluation)

NOx conversion performance of the honeycomb structures is evaluated.

FIG. 4 is a block diagram showing a configuration of an evaluation testing apparatus 400 for evaluating the NOx conversion performance. As shown in FIG. 4, the apparatus 400 is connected to a diesel engine 405 to be tested. The apparatus 400 includes a diesel oxidation catalyst (DOC) system 410, a diesel particulate filter (DPF) 415, and an urea SCR system 420, which are connected in series and arranged in this order. The urea SCR system 420 includes an urea tank 425 and a catalyst carrier section 430. In the catalyst carrier section 430, one of the honeycomb structures according to the above-mentioned Examples and Comparative examples is incorporated.

In this apparatus 400, exhaust gas from the diesel engine 405 is introduced into the DOC system 410. In the DOC system 410, carbon monoxide and hydrocarbon gas are oxidized. Next, gas exhausted from the DOC system 410 is introduced into the DPF 415, in which particulates (PM) in the gas are removed. Next, gas exhausted from the DPF 415 is introduced into the urea SCR system 420. In the urea SCR system 420, urea is supplied from the urea tank 425 to the exhaust gas to produce ammonia according to the reaction of formula (1). The exhaust gas including the ammonia is introduced into the catalyst carrier section 430, in which NOx is treated according to the reactions of formulas (2-1), (2-2), and (2-3). Then, the NOx treated gas is exhausted outside the apparatus 400.

As shown in FIG. 4, a point A is formed between the urea tank 425 and the catalyst carrier section 430 and a point B is formed at the exhaust side of the urea SCR system 420, respectively. By measuring NOx concentration at both points A and B, it becomes possible to evaluate the NOx conversion performance of the honeycomb structures.

The test is conducted from starting the diesel engine 405 until the NO concentration at the point B remains substantially unchanged. To measure the NO concentration, a HORIBA's testing instrument (MEXA-7100D) is used. The detection limit of this testing instrument is 0.1 ppm. In the test, the rotation rate and the torque of the diesel engine 405 are set as follows in accordance with the volume of the honeycomb structure incorporated in the catalyst carrier section 430.

(1) when the volume V of the honeycomb structure is 1.0 L (liter), the rotation rate and the torque of the diesel engine are 1000 rpm and 100 N·m, respectively

(2) when the volume V of the honeycomb structure is 2.4 L (liter), the rotation rate and the torque of the diesel engine are 1500 rpm and 150 N·m respectively

(3) when the volume V of the honeycomb structure is 10.0 L (liter), the rotation rate and the torque of the diesel engine are 3500 rpm and 270 N·m, respectively

(4) when the volume V of the honeycomb structure is 15.0 L (liter), the rotation rate and the torque of the diesel engine are 4500 rpm and 300 N·m, respectively In any case, the volume of the diesel engine 405 used is 1.6 L (liter).

From the obtained measurement results, NOx conversion rate N is calculated according to the following formula (4):

```
   N(%)={(NO concentration in exhaust gas at point A
 - NO concentration in exhaust gas at point B)/( NO
 concentration in exhaust gas at point A)}×100
                                   formula (4)
```

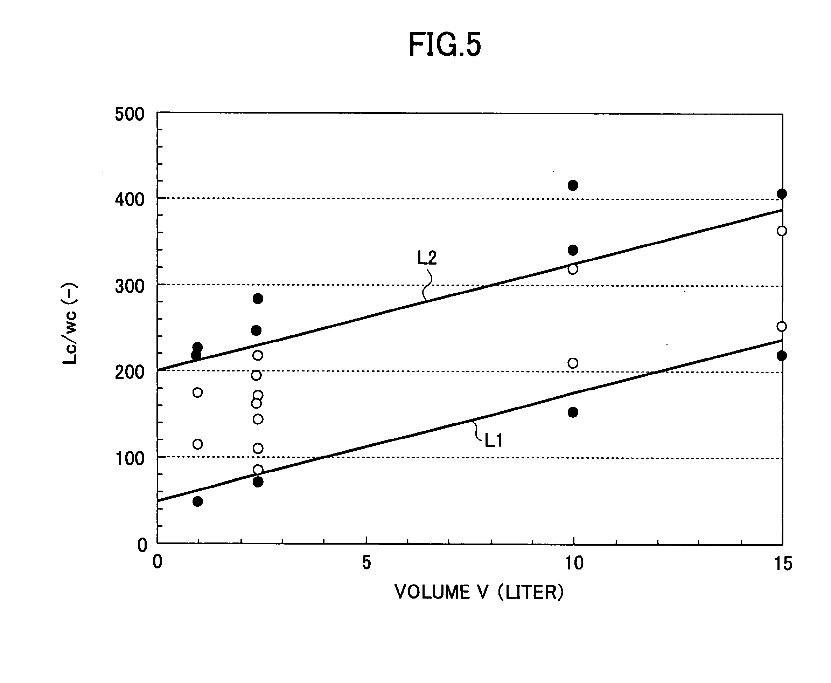

The test results are shown in the right column of Table 1. Further, FIG. 5 shows a relationship between the volume V of the honeycomb structure and the value Lc/wc which is a ratio of the total length Lc of the cells to the cell width wc according to the honeycomb structures of the examples and the comparative examples. In the graph of FIG. 5, a straight line L1 represents the values of A1 (=12.5V+50), and a straight line L2 represents the values of A2 (12.5V+200). Therefore, a range between the straight lines L1 and L2 corresponds to the area where the inequality in formula (3) is satisfied. In FIG. 5, data of Examples are shown by using a symbol ○, and the data of Comparative examples are shown using by a symbol ●.

As the results in Table 1 show, the honeycomb structures according to Examples 1 through 13 have higher NOx conversion performance compared with the honeycomb structures according to Comparative examples 1 though 11. Further, as the results in Table 1 show, when the relationship between the volume V of a honeycomb structure and the value'Lc/wc is in a range of between the straight lines L1 and L2, the honeycomb unit shows an excellent NOx conversion performance.

**Claims**

1. A honeycomb structure (100) including a honeycomb unit (130) including zeolite and inorganic binder, wherein, in the honeycomb unit, plural cells extend from a first end face (110) to a second end face (115) along a longitudinal direction of the honeycomb unit (130), and the plural cells (121) are separated from each other by interposing cell walls (123), the honeycomb structure (100) **characterized in that:**

   a shape of a cross-sectional surface orthogonal to the longitudinal direction of the cells (121) is substantially a square;
   an aperture ratio of the honeycomb unit (130) is in a range from 50% to 65%; and
   a following formula is satisfied:

$$12.5V+50 < Lc/wc < 12.5V+200$$

   where, the symbol V (liter) denotes the volume of the honeycomb structure (100) and the symbols wc (cm) and Lc (cm) denote the cell width and the total length, respectively, of the cells (121).

2. The honeycomb structure (100) according to claim 1, **characterized in that:**

   the zeolite is β-type zeolite, Y-type zeolite, ferrierite, ZSM-5type zeolite, mordenite, faujasite, zeolite A, or zeolite L.

3. The honeycomb structure (100) according to claim 1 or 2, **characterized in that:**

   a weight ratio of alumina to silica in the zeolite is in a range from 30 to 50.

4. The honeycomb structure (100) according to any one of claims 1 through 3, **characterized in that:**

   the zeolite is ion-exchanged with Fe, Cu, Ni, Co, Zn, Mn, Ti, Ag, or V.

5. The honeycomb structure (100) according to any one of claims 1 through 4, **characterized in that:**

   the honeycomb unit (130) further includes inorganic particles other than the zeolite.

6. The honeycomb structure (100) according to claim 5, **characterized in that:**

   the inorganic particles include at least one selected from the group consisting of alumina, titania, silica, and zirconia.

7. The honeycomb structure (100) according to any one of claims 1 through 6, **characterized in that:**

   the inorganic binder includes at least one selected from the group consisting of alumina sol, silica sol, titania sol, water glass, sepiolite, and attapulgite.

8. The honeycomb structure (100) according to any one of claims 1 through 7, **characterized in that:**

the honeycomb unit (130) further includes inorganic fibers.

9. The honeycomb structure (100) according to claim 8, **characterized in that:**

the inorganic fibers include at least one selected from the group consisting of alumina, silica, silicon carbide, silica-alumina, glass, potassium titanate, and aluminum borate.

10. The honeycomb structure (100) according to any one of claims 1 through 9, **characterized in that** the honeycomb structure (100) includes plural honeycomb units (130) bonded with each other by interposing an adhesive layer (150).

# FIG.1

# FIG.2

# FIG.3

# FIG.4

# FIG.5

**EP 2 130 599 A2**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S61171539 B